# DEMANDE DE BREVET EUROPEEN

(11) **EP 3 985 243 A1**
(43) Date de publication de la demande: **20.04.2022**
(21) Numéro de dépôt: 21202590.2
(22) Date de dépôt: 14.10.2021
(51) Int. Cl.: F02N 15/02, F02N 11/08, B60K 6/48, F02B 67/06, F16H 7/00, F16F 15/12, F02N 15/08, F02N 11/04

(54) **DISPOSITIF DE TRACTION ET/OU DE PROPULSION DE VÉHICULE COMPRENANT UN MOYEN DE CONVERSION DE COUPLE**

(30) Priorité: 14.10.2020 FR 2010522
(71) Demandeur: Renault s.a.s, 92100 Boulogne Billancourt (FR)
(72) Inventeur: Millon, Jean-Pierre, 78870 Bailly (FR)
(74) Mandataire: Renault Group

(57) **Abrégé**

Un dispositif (10) de traction et/ou propulsion d'un véhicule, notamment d'un véhicule automobile (1), comprend un moteur à combustion interne (20) comprenant un vilebrequin, un moteur électrique (30), notamment un moteur électrique (30) destiné à démarrer le moteur à combustion interne (20), et le dispositif (10) comprend aussi un moyen de conversion de couple (40) agencé entre le moteur électrique (30) et le moteur à combustion interne (20).

## Description

L'invention concerne un dispositif de traction et/ou de propulsion de véhicule. L'invention porte encore sur un procédé de fonctionnement d'un tel dispositif. L'invention porte encore sur un véhicule automobile comprenant un tel dispositif.

Un véhicule, en particulier un véhicule automobile, comprend généralement un moteur thermique, de type moteur à combustion interne, et un moteur électrique. Le moteur électrique peut ne servir qu'au démarrage du moteur à combustion interne. Dans ce cas, le moteur électrique permet de lancer en rotation un vilebrequin du moteur à combustion interne et, par conséquent, vaincre les premières compressions du moteur à combustion interne. Un tel moteur électrique est généralement appelé démarreur. Dans d'autres cas, le moteur électrique sert non seulement à démarrer le moteur à combustion interne mais également à entraîner ou assister en propulsion et/ou en traction le véhicule. On a alors affaire à une motorisation dite hybride.

Pour assurer sa fonction de démarrage du moteur à combustion interne, le moteur électrique entraîne le vilebrequin du moteur à combustion interne en rotation, généralement via un embrayage et/ou une chaîne et/ou un train d'engrenages et/ou une courroie. A noter que le moteur électrique, ou machine électrique, peut-être réversible. Dans ce cas, la machine électrique peut travailler en mode moteur (mode « boost » d'assistance du moteur thermique) ou en mode récepteur (mode de régénération par récupération d'énergie électrique depuis le moteur thermique). Ainsi, soit le moteur électrique entraîne ou aide le moteur thermique, soit le moteur thermique entraîne la machine électrique qui devient génératrice.

Ainsi, en particulier dans le cas d'un moteur à combustion interne à cycle Diesel, c'est à dire à taux de compression élevé, et a fortiori par temps froid, le moteur électrique a besoin d'un fort couple pour entraîner le vilebrequin en rotation et permettre le démarrage du moteur thermique. Il en résulte un moteur électrique volumineux et un entraînement globalement encombrant pour passer le couple et la puissance, notamment la largeur de la courroie de transmission. Or un compartiment moteur de véhicule offre peu d'espace disponible, il est donc complexe d'y implanter un moteur électrique imposant.

Le but de l'invention est de fournir un dispositif de traction et/ou de propulsion de véhicule remédiant aux inconvénients ci-dessus.

En particulier, l'invention propose un procédé permettant une variation de couple entre un moteur électrique et un moteur à combustion interne.

Pour atteindre cet objectif, l'invention porte sur un dispositif de traction et/ou propulsion d'un véhicule, notamment d'un véhicule automobile, comprenant :
- un moteur à combustion interne comprenant un vilebrequin,
- un moteur électrique, notamment un moteur électrique destiné à démarrer le moteur à combustion interne,
le dispositif comprenant un moyen de conversion de couple agencé entre le moteur électrique et le moteur à combustion interne.

Le moyen de conversion de couple peut être un convertisseur de couple, notamment un convertisseur de couple équipé d'un embrayage ou non.

Le moyen de conversion de couple peut être agencé au niveau du vilebrequin.

Le dispositif peut comprendre un distributeur rotatif agencé entre le vilebrequin et le moyen de conversion de couple.

Le dispositif peut comprendre un moyen de filtration, notamment une poulie filtrante, entre le moteur à combustion interne et le moteur électrique.

Le moyen de conversion de couple peut être entraîné par une courroie et/ou une chaîne et/ou un train d'engrenages.

Le dispositif peut comprendre un moyen de pilotage de la vitesse de rotation du moteur électrique.

L'invention porte encore sur un procédé de fonctionnement d'un dispositif tel que défini précédemment, dans lequel, en cas de moteur à combustion interne en fonctionnement, alors la vitesse de rotation du moteur électrique est pilotée par le moyen de pilotage de sorte à permettre une variation du couple entre le moteur électrique et le moteur à combustion interne.

En cas de moteur à combustion interne en fonctionnement à un régime donné, alors la vitesse de rotation du moteur électrique peut être pilotée à une vitesse de rotation proche du régime donné de sorte à limiter les pertes liées au moyen de conversion de couple.

L'invention porte encore sur un véhicule, notamment un véhicule automobile, comprenant un dispositif tel que défini précédemment.

Ces objets, caractéristiques et avantages de la présente invention seront exposés en détail dans la description suivante d'un mode de réalisation d'un véhicule automobile, faite à titre non-limitatif en relation avec les figures jointes parmi lesquelles :
[Fig. 1] La figure 1 est une vue schématique d'un véhicule automobile selon un mode de réalisation de l'invention.
[Fig. 2] La figure 2 est une vue schématique d'un dispositif de traction et/ou de propulsion du véhicule automobile selon un mode de réalisation de l'invention.
[Fig. 3] La figure 3 est une vue schématique d'un détail du dispositif de traction et/ou de propulsion du véhicule automobile selon un mode de réalisation de l'invention.
[Fig. 4] La figure 4 est un graphique représentant le couple en fonction du régime machine.

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

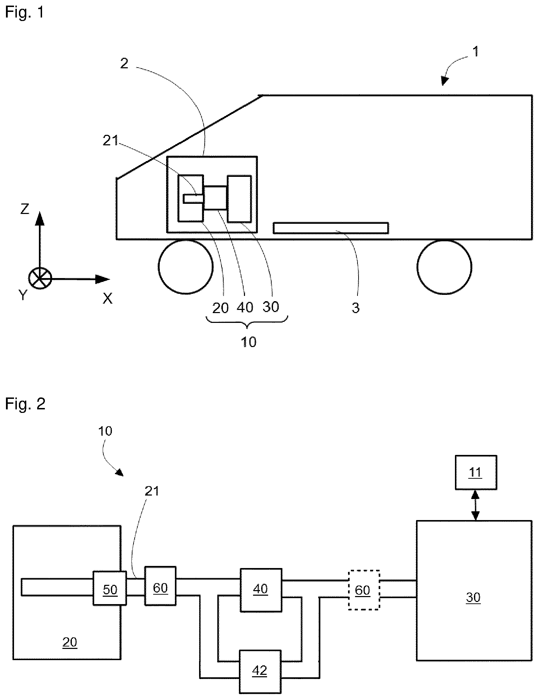

Un véhicule, par exemple un véhicule automobile 1, selon un mode de réalisation de l'invention, est illustré schématiquement sur la figure 1. Le véhicule automobile 1 comprend un compartiment moteur 2 disposé par exemple à l'avant du véhicule et/ou à l'arrière du véhicule. Le véhicule comprend un dispositif 10 de traction et/ou de propulsion destiné à le mouvoir. De préférence, le dispositif 10 de traction et/ou de propulsion est agencé au sein du compartiment moteur 2.

Comme illustré sur la figure 1, le dispositif 10 de traction et/ou de propulsion comprend un moteur à combustion interne 20. Le moteur à combustion interne comprend avantageusement un vilebrequin 21. Par exemple, le moteur à combustion interne est à allumage commandé ou à cycle Diesel. Le dispositif 10 de traction et/ou de propulsion comprend encore un moteur électrique 30. Par exemple, le moteur électrique 30 est apte à démarrer le moteur à combustion interne 20.

De préférence, le véhicule automobile 1 est de type à motorisation hybride. Ainsi, le moteur à combustion interne 20 est apte à mouvoir le véhicule, notamment sans l'aide du moteur électrique. Le moteur électrique 30 peut également être apte à mouvoir le véhicule ou assister le moteur thermique dans cette fonction, notamment sans l'aide du moteur thermique 20, par exemple alimenté en énergie électrique stockée au sein d'une batterie 3. Le véhicule 1 comprend alors la ou les batteries 3.

Le dispositif 10 comprend encore un moyen de conversion de couple 40.

Comme illustré sur la figure 2, le moyen de conversion de couple 40 est agencé entre le moteur électrique 30 et le moteur à combustion interne ou thermique 20.

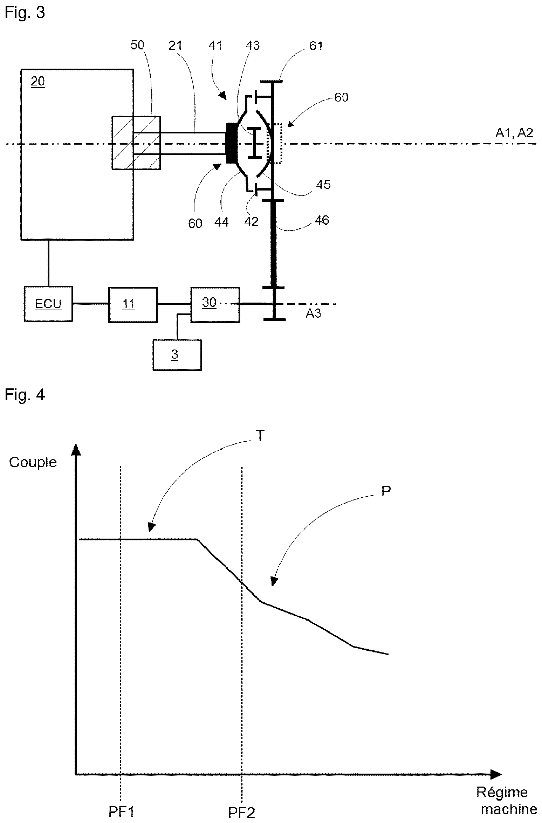

Comme illustré sur la figure 3, de préférence, le moyen de conversion de couple est un convertisseur de couple 41. Le convertisseur de couple 41 est de préférence un convertisseur hydraulique, par exemple comprenant un stator 43, une turbine 44 et une pompe ou compresseur 45. Le convertisseur de couple 41 est par exemple équipé d'un embrayage 42, appelé « Lock-up », permettant de solidariser la turbine 44 et le compresseur 45 afin d'éviter le glissement entre eux et de réduire les pertes énergétiques dans les phases stabilisées par exemple.

Alternativement, le convertisseur de couple 41 est dépourvu d'embrayage.

Avantageusement, le moyen de conversion de couple 40 est agencé au niveau du vilebrequin 21.

Par exemple, la turbine 44 du convertisseur de couple 41 est en prise avec le vilebrequin 21. De préférence, ledit convertisseur entoure l'extrémité de distribution du vilebrequin ; la turbine a alors un axe de rotation A1 confondu, ou sensiblement confondu, avec l'axe de rotation A2 du vilebrequin 21. A noter que le stator 43 peut être monté sur une roue libre ou non.

De préférence, comme illustré sur les figures 2 et 3, le dispositif 10 comprend encore un distributeur rotatif 50. Le distributeur rotatif 50 est par exemple agencé entre le vilebrequin 21 et le moyen de conversion de couple 40.

De préférence, le dispositif 10 comprend encore un moyen de filtration ou découplage ou amortissement mécanique 60 entre le moteur à combustion interne 20 et le moteur électrique 30, de préférence en série, de sorte à limiter voire annihiler les vibrations de torsion, ou de transmission de couple, entre les deux moteurs. Par exemple le moyen de filtration 60 est une poulie filtrante 61, illustrée sur la figure 3, comprenant une masse, un ressort et un moyen de frottement. Le ressort peut être assuré par un élastomère et/ou par un ressort à spires. Les frottements sont par exemple de type mécaniques ou, de préférence, liés à l'écoulement d'un fluide. Comme illustré en pointillés sur la figure 3, une telle poulie filtrante est par exemple en prise ou en contact avec la pompe 45 du convertisseur de couple 41, le vilebrequin étant en prise ou en contact avec la turbine 44 du convertisseur de couple. A noter que la rotation de la poulie filtrante entraîne la rotation de la pompe, et vice versa, par exemple par le biais d'un lien souple tel qu'une chaîne ou une courroie 46 ou encore d'un train d'engrenages. En effet, par exemple, la poulie filtrante a un axe de rotation A3 non confondu avec les axes de rotation A1, A2.

Alternativement, comme illustré sur la figure 3 en trait plein, le moyen de filtration 60 est agencé au niveau de la jonction entre le vilebrequin 21 et la turbine 44. En effet, comme illustré sur la figure 2 davantage schématique, le moyen de filtration 60 peut être agencé entre le moteur à combustion interne 20 et le moyen de conversion de couple 40 ou entre le moyen de conversion de couple 40 et le moteur électrique 30 (en pointillés).

Alternativement le moyen de filtration 60 est de type amortisseur de choc, notamment comprenant un élastomère.

Le moyen de conversion de couple 40 est de préférence entraîné par une courroie et/ou une chaîne et/ou un train d'engrenages.

De préférence, le dispositif 10 comprend encore un moyen de pilotage 11 de la vitesse de rotation du moteur électrique 30. Ce moyen de pilotage 11 est par exemple relié de manière filaire, ou sans fil, au moteur électrique 30.

De préférence encore, le dispositif 10 ou le moteur thermique 20 ou le moteur électrique 30 comprend une unité de commande électronique. Par exemple, comme illustré sur la figure 3, l'unité de commande électronique ECU placée fonctionnellement entre le moteur à combustion interne et le moteur électrique est apte à piloter lesdits moteurs.

Un mode d'exécution d'un procédé de fonctionnement du dispositif 10 va maintenant être décrit.

Lors du démarrage du véhicule par exemple, le moteur électrique 30 démarre le moteur à combustion interne 20. Ce démarrage peut avoir lieu alors que le moteur thermique 20 est « froid » ou encore suite à un arrêt temporaire du moteur thermique, par exemple à un feu tricolore, un stop, une intersection ou dans tout autre situation dans laquelle le moteur thermique est déjà « chaud » ou sensiblement « chaud ».

Au cours de la phase de démarrage, l'écart de régime de rotation génère un couple plus important sur l'arbre moteur sans mettre le système d'entraînement et de réduction en dehors de sa zone de fonctionnement. Le moteur électrique assiste le démarrage du moteur thermique. La vitesse du vilebrequin est sensiblement nulle tandis que la vitesse de rotation du moteur électrique est élevée. Autrement dit, la puissance est identique mais comme le régime est plus élevé, le couple transmis par le moteur électrique à la courroie reste faible. Le convertisseur reçoit cette puissance et la « retransforme » en un couple élevé / régime plus faible. Le visco coupleur permet un démarrage en douceur (suivant les contraintes de limitation du système d'entraînement) et de réduire les performances requises de la machine électrique.

Une fois le moteur à combustion interne 20 en fonctionnement, alors la vitesse de rotation du moteur électrique 30 est pilotée par le moyen de pilotage 11 de sorte à permettre une variation du couple entre le moteur électrique 30 et le moteur à combustion interne 20. Autrement dit, en cours de fonctionnement du moteur thermique, le pilotage du régime du moteur électrique en différentielle du régime du moteur thermique permet de piloter le couple transmis. Tant qu'on n'accouple pas l'entrée et la sortie du convertisseur de couple, il faut du glissement pour passer du couple entre les deux moteurs 20, 30. Le couple du moteur électrique 30 est alors multiplié en fonction de l'écart de régime entre les deux moteurs.

De préférence, sans verrouillage de type lock-up, lorsque le moteur thermique est en fonctionnement, il convient de piloter la rotation du moteur électrique à une vitesse proche de celle du vilebrequin pour réduire l'entrainement du moteur électrique par le moteur thermique, de sorte à limiter les pertes liées au moyen de conversion de couple 40, c'est-à-dire au convertisseur de couple 41. Autrement dit on cherche à piloter le moteur électrique au plus près du régime du moteur thermique pour limiter les pertes dues au convertisseur. En cas d'embrayage 42, la position embrayée permet d'annuler ces pertes et impose le régime du moteur thermique au moteur électrique.

Comme illustré sur la figure 4, une phase T représente une augmentation du régime machine à iso couple, autrement dit à couple constant ou sensiblement à couple constant, par exemple sans convertisseur de couple. Cette phase T connaît une limitation thermique et/ou électromagnétique (saturation). Une phase P représente une augmentation du régime machine à iso puissance, autrement dit à puissance constante ou sensiblement à puissance constante, de préférence grâce à un convertisseur de couple. Cette phase P connaît une limitation électromagnétique liée à la source d'énergie et/ou de type thermique.

Le point de fonctionnement PF1 est obtenu, sans convertisseur de couple, au démarrage et/ou décollage et/ou relance à bas régime du moteur à combustion interne. Le point de fonctionnement PF2 est obtenu au démarrage et/ou décollage et/ou relance à bas régime du moteur à combustion interne, avec le convertisseur de couple. Dans ce cas, le pilotage du moteur électrique à régime plus élevé offre davantage de couple à la machine électrique, c'est l'un des intérêts d'un fonctionnement à iso puissance et non à iso couple.

En résumé, le dispositif 10 permet un couplage d'une machine électrique réversible, ou non, à un moteur thermique par l'intermédiaire d'un convertisseur de couple. Le rapport de réduction entre l'arbre de la machine électrique 30 et le vilebrequin 21 du moteur thermique 20 est alors modulable, variable, par l'intermédiaire de la différence de régimes de rotation des deux moteurs. En outre, grâce au moyen de filtration 60, le dispositif 10 permet de découpler l'aspect vibratoire ou « acyclismes » tout en multipliant le couple d'entraînement dans les phases de démarrage, d'accélération ou de décélération. Comme évoqué précédemment, la multiplication du couple est réalisée au niveau du vilebrequin 21, le convertisseur de couple étant agencé de préférence sur le vilebrequin. Le couple, appliqué de préférence à une courroie, est alors réduit ce qui limite les patinages et/ou les efforts importants et est gage de fiabilité. Alternativement, le couple peut être transmis par une chaîne ou un train d'engrenage.

Il devient alors possible de démarrer le moteur à combustion interne 20, même « à froid » et/ou par températures extérieures très froides, avec un couple faible. Ainsi le moteur électrique 30 peut être moins puissant, davantage compact, et moins onéreux. En outre, la récupération d'énergie au freinage et/ou en décélération peut être accrue. En effet, le passage de la « première compression », même en cas de moteur thermique à cycle Diesel et par conséquent à taux de compression élevé, requiert moins de puissance de la part du moteur électrique. Le moteur électrique étant moins puissant, il en résulte une baisse de sa consommation électrique lors d'un démarrage du moteur thermique. De plus le dimensionnement de l'entraînement entre le moteur électrique 30 et le convertisseur de couple 41 lié au vilebrequin 21 peut être revu à la baisse, le couple à transmettre étant plus faible.

Lors des phases d'accélération et/ou de roulage, le couple de la machine électrique 30 vu par le vilebrequin (et donc la roue) est augmenté sans que le couple vu par l'entraînement (via une chaîne, une courroie ou un pignon) ne le soit. Cet écart de couple provient du glissement dans le convertisseur de couple 41.

En cas de fonctionnement d'un élément auxiliaire, par exemple la climatisation, et d'arrêt du moteur à combustion interne, par exemple dû à un arrêt du véhicule équipé de la fonction « Stop and Start » cet élément auxiliaire peut continuer à fonctionner. En effet l'économie d'énergie électrique liée au démarrage du moteur à combustion interne permet de prolonger l'utilisation d'un ou plusieurs éléments auxiliaires sans redémarrage immédiat du moteur thermique.

En cas de convertisseur de couple comprenant un embrayage 42, il est possible de ponter, c'est-à-dire accoupler, l'entrée et la sortie du convertisseur de couple pour réduire les pertes liées à l'écoulement et/ou cisaillement des fluides au sein du convertisseur de couple en régime stabilisé.

Ainsi, peu d'espace au sein du compartiment moteur du véhicule suffit pour implanter le moteur électrique à faible encombrement. La consommation d'électricité pour démarrer le moteur à combustion interne étant diminuée, l'énergie électrique économisée peut être stockée dans la ou les batteries ou encore utilisée par d'autres composants fonctionnant avec de l'énergie électrique. En cas de démarrages du moteur à combustion interne fréquents et peu espacés dans le temps, la consommation en énergie électrique du moteur électrique étant faible, la recharge de la ou des batteries d'alimentation du moteur électrique demeure possible.

En remarque, la solution atteint donc l'objet recherché de limiter la puissance et par conséquent la consommation électrique nécessaires au moteur électrique pour démarrer le moteur thermique et présente les avantages suivants :
- Elle peut être appliquée à tous types de véhicules automobiles, en particuliers dotés de motorisation hybride, quelle que soit leur gamme et quelle que soit leur tension, par exemple 12V, 48V, voire davantage ;
- Elle peut être appliquée sur d'autres véhicules ou moyens de transport.

## Revendications

1. Dispositif (10) de traction et/ou propulsion d'un véhicule, notamment d'un véhicule automobile (1), comprenant :
- un moteur à combustion interne (20) comprenant un vilebrequin (21),
- un moteur électrique (30), notamment un moteur électrique (30) destiné à démarrer le moteur à combustion interne (20), **caractérisé en ce que** le dispositif (10) comprend un moyen de conversion de couple (40) agencé entre le moteur électrique (30) et le moteur à combustion interne (20).

2. Dispositif (10) selon la revendication précédente, **caractérisé en ce que** le moyen de conversion de couple (40) est un convertisseur de couple (41), notamment un convertisseur de couple (41) équipé d'un embrayage (42) ou non.

3. Dispositif (10) selon l'une des revendications précédentes, **caractérisé en ce que** le moyen de conversion de couple (40) est agencé au niveau du vilebrequin (21).

4. Dispositif (10) selon la revendication précédente, **caractérisé en ce que** le dispositif (10) comprend un distributeur rotatif (50) agencé entre le vilebrequin (21) et le moyen de conversion de couple (40).

5. Dispositif (10) selon l'une des revendications précédentes, **caractérisé en ce que** le dispositif (10) comprend un moyen de filtration (60), notamment une poulie filtrante (61), entre le moteur à combustion interne (20) et le moteur électrique (30).

6. Dispositif (10) selon l'une des revendications précédentes, **caractérisé en ce que** le moyen de conversion de couple (40) est entraîné par une courroie et/ou une chaîne et/ou un train d'engrenages.

7. Dispositif (10) selon l'une des revendications précédentes, **caractérisé en ce que** le dispositif (10) comprend un moyen de pilotage (11) de la vitesse de rotation du moteur électrique (30).

8. Procédé de fonctionnement d'un dispositif (10) selon la revendication précédente, **caractérisé en ce qu'**en cas de moteur à combustion interne (20) en fonctionnement, alors la vitesse de rotation du moteur électrique (30) est pilotée par le moyen de pilotage (11) de sorte à permettre une variation du couple entre le moteur électrique (30) et le moteur à combustion interne (20).

9. Procédé de fonctionnement selon la revendication précédente, **caractérisé en ce qu'**en cas de moteur à combustion interne (20) en fonctionnement à un régime donné, alors la vitesse de rotation du moteur électrique (30) est pilotée à une vitesse de rotation proche du régime donné de sorte à limiter les pertes liées au moyen de conversion de couple (40).

10. Véhicule, notamment véhicule automobile (1), **caractérisé en ce qu'**il comprend un dispositif (10) selon l'une des revendications 1 à 7.
